# EUROPEAN PATENT APPLICATION

(11) **EP 2 896 667 A1**
(43) Date of publication of application: **22.07.2015**
(21) Application number: 14380004.3
(22) Date of filing: 21.01.2014
(51) Int. Cl.: C09D 175/04, B65D 90/50, C09J 175/04, B65D 90/02

(54) **Repairing and sealing method for tank with leak problems due corrosion, and repair sealer coating**

(71) Applicant: Grupo Navec Servicios Industriales, SL, 43140 La Pobla de Mafumet Tarragona (ES)
(72) Inventor: Ojeda Olivé, Saturnino, 43005 Tarragona (Tarragona) (ES); López Dabaliña, Manuel, 43007 Tarragona (ES)
(74) Representative: Juncosa Miro, Jaime

(57) **Abstract**

The method consists of, after cleaning the interior of the tank, the application on the interior surfaces of the tank to be repaired with a sealant coating comprised of a thick continuous sealant layer formed by a structural polyurethane adhesive, solvent-free, which is cured and covered by a topcoat nonreactive with the contents of the tank, waterproof, and compatible with said coating. The repair and sealant coating is comprised of a continuous sealant layer with a thickness of at least 2 mm and a topcoat with a thickness of approx. 500 microns.

## Description

### Technical Field

The present invention relates to a method for repairing and sealing tanks, especially those of high capacity, with potential leakage problems.

The proposed method is intended for the repair of tanks that have suffered internal or external corrosion, especially corrosion that is located at the bottom of the tank. This provides a continuous sealing coating that supplements the thickness of overlapped metal sheets welded together which form the bottom of the tank.

The invention also refers to the characteristics of said continuous sealant coating comprised of an initial, very thick, continuous sealant layer and a second thinner layer or topcoat, waterproof, resistant to tank contents and compatible with the first layer of continuous sealant.

### State of the Art

It is known by CN-A-101597460, the use of a continuous sealant coating that provides an interior sealant layer applied to the inner face of a tank of large capacity. This document describes a synthetic bi-component compound which has the qualities of being waterproof, elastic and corrosion resistant, but does not mention that this material has any significant mechanical resistance qualities, or that it is applied in sufficient thickness to have any structural use.

Also, documents DE-A-20216790U and CN-A-101 580 671 describe a tank with an interior coating of polyurethane, but they suffer from the same deficiencies as the previous document.

The use of an initial sealant layer and a topcoat with special properties as to be in contact with the contents of the tank, are described in US-A-4613922, but in this case, the interior layer is used to prevent the accumulation of electrostatic charges that could produce ignition of the stored product. Furthermore, in this case, the continuous sealant coating is applied over an aluminium sheet which is overlaid on the tank walls.

Previous data does not propose a method for repairing and sealing of tanks that provides a sealant layer with structural capacity.

Furthermore, and in relation to traditional metallurgical repair by replacement and reinforcement of tank bottoms by welding, especially large tanks, the proposed method offers the following advantages:
- safety because no welding sparks are produced, or other risks associated with these operations;
- quickness, approximately involving less than half the time required in a mechanical repair, and
- requiring a smaller number of workers in the execution of work during which risks are also avoided.

### Brief Description of the Invention

The invention provides a method and a coating for the repair and sealing of large tanks with watertightness problems due to corrosion, particularly such problems located on the bottom of the tank and which affect the interior face of the tank.

The proposed method consists in the application of a continuous sealant coating on the damaged tank bottom, spreading said coating material on the bottom in a fluid manner which will solidify and create a thick, continuous elastic sealant layer with mechanically resistant properties. This continuous sealant layer joined with the overlapping welded metal sheets that form the bottom of the tank and even though it suffers structural deformations under loads of the tank contents and / or transfer or ground movement, it will maintain its resistance. To this thick continuous sealant layer another thin layer or topcoat is applied, waterproof and resistant to the product contained in the tank.

Large tanks are typically tanks with capacities of hundreds or thousands of cubic meters for the storage of liquid fuels, petroleum or petroleum byproducts, industrial chemicals, or waste. Such tanks normally consist of reinforced concrete, or preferably by multiple welded metal sheets, overlapping in at least the parts subjected to higher pressures, as is the tank bottom.

The proposed repair coating is comprised of a continuous thick sealant layer and, placed on its interior face, a thin topcoat nonreactive (resistant to chemical reactions) to the fluid contained in the tank as well as waterproof.

Said continuous sealant layer is formed of a structural polyurethane-based adhesive, without solvents, which is placed and spread in fluid form on the substrate, which in this case are the interior faces of the bottom and / or part of the adjacent perimeter walls of the tank (which will be joined by a round corner (coving)), so that once dried and cured it will form a seamless continuous coating. The thickness of said continuous sealant layer is at least 2 mm, and preferably, the average thickness is greater than 3 mm, with some points of even greater thickness, as are the union of the tank bottom with the vertical perimeter walls, and / or the overlapping joints between metal sheets, which are filled with a greater thickness of continuous sealant coating forming slopes.

The nonreactive, waterproof topcoat that overlies in a thin layer said continuous sealant layer, completes the proposed coating. It is made using a bicomponent polymer such as epoxy-siloxirane, which can be applied by airless spray gun, roller or brush. After drying and hardening, it provides a finish coating compatible with the continuous sealant layer and is chemically nonreactive with the expected content of the storage tank. The thickness of the nonreactive top coating, will be a few microns (e.g. 400 microns) and less than 0.1 mm, and will be perfectly adhered to the coating forming a continuous thin layer. This nonreactive topcoat, in perimeter walls adjacent to the bottom, extends to a height of 500 mm and no less than 200 mm.

The proposed continuous sealant coating seals existing leaks, prevents further oxidation processes and also increases the mechanical resistance of the substrate to which it adheres, particularly traction or bending forces, therefore preventing any future leaks since the coating allows deformation without separation from the sheet to which it is adhered without cracking due to its elasticity.

Due to all these features, this continuous sealant coating is especially suitable for repairing and sealing the bottom of tanks, where the pressure of the stored fluid is greater and causes deformations and cracks, especially if the thickness of the bottom has been altered by the affects of corrosion. It is also suitable for the lower portions of the perimeter walls of the tank, thus creating a firm and watertight union between walls and bottom.

The proposed method for the repair and sealing of large tanks with corrosion problems include the following stages:
A first stage performed on an empty tank comprised of an interior cleaning, including removal of rust in accessible areas by means of water and / or sand blasting. In this stage, if severe corrosion or undesirable breaks are detected, one can proceed to add new overlaid metal sheets to these damaged regions, fixed and coated using the same polyurethane adhesive that forms the continuous sealant coating and then are eventually welded.

Once the tank cleaning is completed, the surfaces will be applied with the continuous sealant coating, comprised of said nonreactive continuous sealant and top coat, and once dry, one can proceed with the filling of the tank. To obtain the desired thickness and an optimal and regular coverage, it is advisable to use gauging tools in order to enable the spread of the continuous sealant coating with a uniform thickness over the entire surface. It is also recommended to perform the application of said continuous sealant layer in at least two successive stages with an intermediate drying time to allow the hardening of the previous layer. It is further desirable that the thickness of the continuous sealant layer to be dried does not exceed 2 mm, in order to obtain an optimum strength and impermeability.

The drying and / or consolidation by curing of the continuous sealant layer may also preferably include a curing by hot air, which helps to accelerate the process, and performed at a controlled temperature and humidity will provide an improved capacity of resistance and bonding of the substrate to the final coating.

On the interior of the continuous, solidified sealant layer, a nonreactive, thin finish coating is spread, applied as if it were paint. This nonreactive layer must also be cured by hot air in order to accelerate drying and to enhance its final strength.

Other features of the invention appear in the following description.

### Brief Description of the Figures

The previous and other advantages and features will be better understood from the following detailed description of examples performed in reference to the accompanying drawings, which must be taken as illustrative and not limiting to:
Fig. 1 is a partial cross sectional view of a portion of a tank bottom that has been a repaired by applying the coating according to the method explained.
Fig. 2 is equivalent to the previous view but indicating, by dotted lines, different positions that said tank bottom can adopt, by structural deformation, without losing bonding between the coating and the substrate (welded plates) of the bottom of the tank.
Fig. 3 is a cross sectional view showing a detail of a portion of a bottom of a tank, adjacent to a perimeter wall, that has been repaired, indicating in particular the area of the perimeter wall that is covered by the aforementioned nonreactive finish coating.

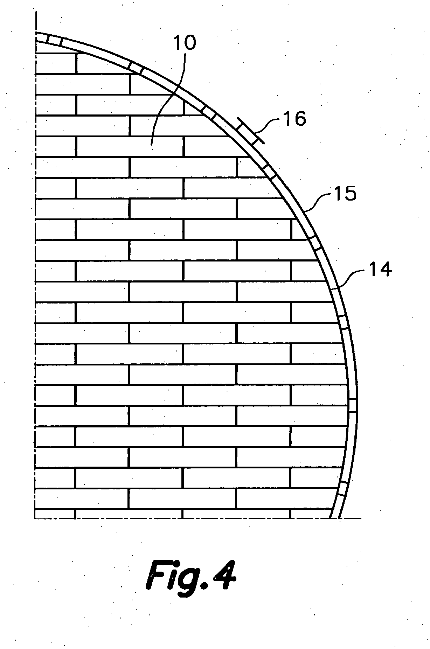

Finally, Fig. 4 is a plan view of a fraction of the base of the tank, without the continuous sealant coating, thus showing a breakdown of the metal sheets forming it, and where it can be also seen the perimeter wall of the tank, of circular plan, in order to improve its resistance to pressure, an external reinforcement ring and some pilasters also arranged in the outside, complement the perimeter closing for a better resistance to the pressure.

### Detailed description of an embodiment

The invention proposes a continuous sealant coating, thick (of the order of at least 3 mm), flexible, of a polyurethane nature, suitable for the repair of corroded tanks, particularly oil or highly reactive fluid storage tanks. The proposed continuous sealant coating is provided, on the interior face, with a top coating, with nonreactive epoxy siloxirane, highly chemically resistant to the product stored in the tank.

The coating used comprises, according to an application example, a thick continuous sealant layer formed from a structural bi-component polyurethane-based adhesive, solvent-free, obtained by the mixture of two adhesive components A and B. One of said components A, polyurethane type, acting as a resin, contains organic compounds with hydroxyl and the second component B, acting hardener, is based on isocyanates. The mixture of these two components A and B in a weight ratio of 5:1, or 4:1 provides a hard elastic product obtained by the chemical reaction of these components. After curing, preferably heat forced (for example to 40 ° C), the product does not show a measurable change in volume.

The nonreactive, waterproof topcoat consists of a polymer system specifically a bicomponent epoxy-siloxirane polymer activated by mixing a catalyst and cured at ambient temperature or by forced heat at low temperature (for example 40 ° C) that firmly adheres to the thick coating mentioned before.

The products used are all commercially available and are being used, in particular, for bonding elements such as automotive sheet metal as well as in the shipbuilding industry.

Adhesion tests according to UNE-EN ISO 4624 have been performed with the continuous sealant coating of the invention. A steel sample of approximate dimensions 146 mm x 68 mm with a 3 mm thick continuous sealant layer, polyurethane type, and a finish coat with two layers of approximately 200 microns with a polymeric bicomponent oxirane and activated by a catalyst mixture.

Curing was carried out at 40 ° C for approximately 12 hours after one hour had elapsed from its application.

The results of the adhesion strength by traction is reflected in the table below.

| Adherence (MPa) | Type of breaking |
|---|---|
| 6,4 | 80% B (cohesive breaking of the first layer) |
| | 20% B/C (adhesive separation between the first layer and the finishing layer) |
| 6,8 | 50% B (cohesive breaking of the first layer) |
| | 50% B/C (adhesive separation between the first layer and the finishing layer) |
| 7,7 | 100% B (cohesive breaking of the first layer) |

Testing and analysis were also performed in order to check the physicochemical suitability of the sealing of said nonreactive layer in contact with different liquid simulants. The results obtained with JET-A1 (aviation gasoline) + water and mixture of solvents (isooctane, toluene, xylene) + water were satisfactory, showing the non-reactivity of the finished coating.

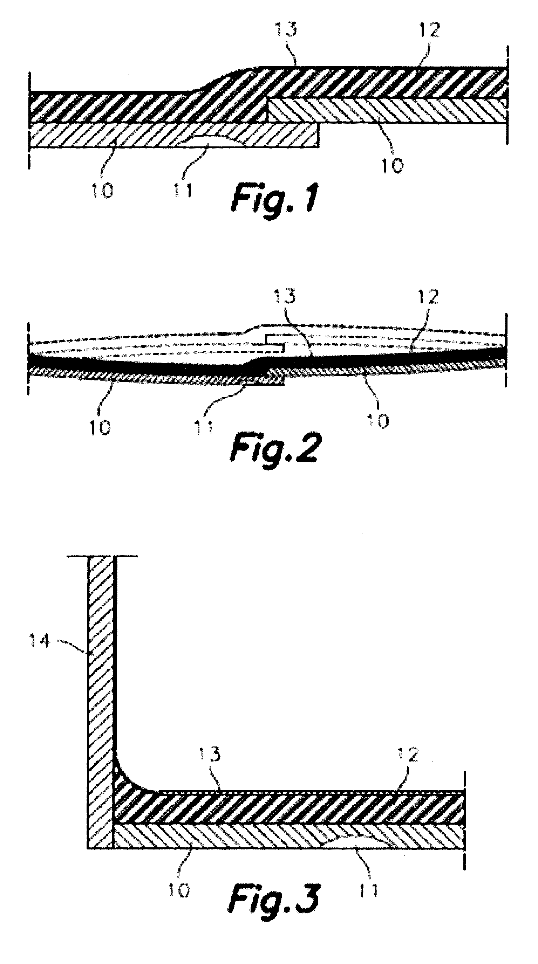

In Fig. 1 a section of a bottom of a tank is shown formed by the juxtaposition of overlapping plates (10), welded together, with one of these plates (10) showing a damaged area (11) on its outer face due to corrosion which causes a considerable weakening of the wall.

The deterioration by corrosion can also be on the interior face, in which case before applying the coating all rust will be removed.

The tank bottom repair method consists of providing a continuous sealant layer (12) of high thickness, of a structural bicomponent polyurethane-based adhesive, as explained above, and a coat in the form of a thin layer (12) (e.g. approx. 500 microns thick) as a finish or coating, nonreactive with the contents of the tank and compatible with the continuous sealant layer and with which it will firmly bond.

Fig. 2, shows the continuous sealant coating that comprises the nonreactive continuous sealant layer with topcoat, which is firmly anchored to the plate (10) forming the bottom of the tank so that although it undergoes deformations by loads or ground movements, bonding of the coating will be maintained and therefore the sealing of any cracks or weakened areas of the tank bottom will also be maintained.

Fig. 3 shows that the continuous sealant layer (12) extends and links by means of curved edge (coving) with the perimeter metal wall (14), to which it is also firmly adhered to. The nonreactive topcoat (13) extends over the perimeter wall (14) to a height of approx. 500 mm but no less than 200 mm.

Finally, Fig. 4 shows a plan view, without the continuous sealant coating 12, of a breakdown of the metal sheets 10 that conform a fraction of the bottom of the base of the tank, and how a perimeter wall 14, of circular plan, is externally reinforced by in a reinforcement ring 15, and by some pilasters 16, that increase the resistance of said perimeter wall 14 to the pressure of the liquid contained in the tank.

## Claims

1. A method for repairing and sealing large tanks with watertightness problems due to corrosion, particularly those problems located on the bottoms and walls formed by the welded union of multiple metal sheets or reinforced concrete, acting on the interior face of the tank. The method comprises the following stages:
a) preparation, cleaning, rust removal and drying the interior of the tank;
b) application of a continuous sealant coating on the interior surfaces of the tank to be repaired and sealed, forming a substrate, this application is in fluid form;
c) curing and solidification of the continuous sealant coating;
**characterized in that**:
• The continuous sealant coating is integrated by a continuous sealant layer formed by a structural polyurethane adhesive, solvent-free, which is applied on the substrate to be repaired and subsequently cured;
• This continuous sealant coating, firmly adhered to the substrate to be repaired, once cured, provides a thickness of at least 2 mm;
• The continuous sealant coating increases the substrate's mechanical resistance and allows a bending of the coated substrate without causing separation or cracking of the continuous sealant layer;
• The interior face of the continuous sealant coating is covered by a sealant topcoat, nonreactive with the contents of the tank, waterproof, and compatible with the coating.

2. The method according to claim 1 **characterized in that** the sealant coating, when applied to the bottom of a tank, provides a mean thickness of at least 2 mm.

3. The method according to claim 1 or 2 **characterized in that** the continuous sealant coating is applied in at least two superimposed layers, with an intermediate curing time for the first layer and is extended over the substrate with a thickness measured with a gauge.

4. The method according to claim 1 **characterized in that** the nonreactive topcoat, has a thickness less than 0.1 mm.

5. The method of claim 1 **characterized in that** the continuous sealant layer is obtained by mixing, in a weight ratio of 5:1 or 4:1 one organic compound having hydroxyl groups functioning as a resin and a hardener for the isocyanates group.

6. The method according to claim 1 or 4 **characterized in that** the nonreactive topcoat is a bicomponent epoxy-siloxirane polymer activated with a catalyst and subsequently cured.

7. The method according to any of the preceding claims **characterized in that** it extends over all or part of the bottom of a tank and this nonreactive topcoat also affects a lower fraction of the perimeter walls thereof to a height of at least 200 mm

8. The method according to any of the preceding claims **characterized in that** the curing of the continuous sealant coating and / or nonreactive topcoat, is performed at ambient temperature or with forced heat at a temperature of about 40 ° C or lower.

9. The method according to claim 2 **characterized in that** the bonding of the continuous sealant layer extended from the bottom of the tank up the perimeter walls thereof, and / or on the overlapped joints between metal sheets will have a layer thickness of more than 3mm forming curved edges (coving) and slopes.

10. A repair coating and sealant for large tanks with watertightness problems due to corrosion, particularly those problems located on the bottoms and walls formed by the welded union of multiple metal sheets, acting on the interior face of the tank, the coating comprising:
• a continuous sealant layer adhered to the interior surfaces of the tank to be repaired and sealed forming a substrate,
• this layer being a continuous sealing layer of an in-situ solidified material after placement;
**characterized in that**:
• the continuous sealant layer is composed of a bicomponent polyurethane structural adhesive free of solvents;
• this continuous sealant layer, firmly bonded to the substrate, has a thickness of at least 2 mm, providing increased mechanical resistance to the substrate and permits bending of the coated substrate without separation or cracking of the continuous sealant layer;
• the interior face of the continuous sealant layer has a topcoat, nonreactive with the contents of the tank and is compatible with the continuous sealant layer.

11. The coating according to claims 10 **characterized in that** when applied to the bottom of a tank, has an average thickness of at least 3 mm

12. The coating according to claim 10 **characterized in that** this nonreactive topcoat has a thickness less than 0.1 mm.
